(19) Europäisches Patentamt

European Patent Office

Office européen des brevets

(11) **EP 1 555 768 A1**

(12) **EUROPEAN PATENT APPLICATION**

(43) Date of publication:
   **20.07.2005 Bulletin 2005/29**

(51) Int Cl.$^7$: **H04B 7/08**, H04L 1/06

(21) Application number: **04257801.3**

(22) Date of filing: **15.12.2004**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **23.12.2003 GB 0329822**

(71) Applicant: **Kabushiki Kaisha Toshiba
   Tokyo 105-8001 (JP)**

(72) Inventor: **Sandell, Magnus
   Bristol BS1 4ND (GB)**

(74) Representative: **Midgley, Jonathan Lee
   Marks & Clerk
   57-60 Lincoln's Inn Fields
   London WC2A 3LS (GB)**

(54) **Data encoding for static MIMO channels**

(57)    A channel scrambler (214) for use in a transmitter (201) employing a plurality of transmit antennas (206,207) comprises at least two signal inputs for inputting a signal and a processor for applying a time-varying scrambling matrix to each input signal to produce a scrambled signal. An output stage is provided for outputting each scrambled signal to an antenna. The scrambling matrix is preferably different for each symbol period of a channel block.

Figure 2

**EP 1 555 768 A1**

### Description

This invention relates to apparatus, methods and computer program code for encoding in communication systems in which a receiver receives signals from a plurality of transmit antennas, and in particular where the plurality of transmit antennas is associated with a single transmitter.

A particular problem arises in a communications links where a transmitter with more than one transmit antenna is employed, since signals received from different transmit antennas interfere with one another. This results in so-called multi-stream interference (MSI) and causes decoding difficulties. The potential advantage, however, is greatly increased throughput (that is, a higher bit rate) for such a communications link. In this type of MIMO (Multiple-input Multiple-output) communication link the "input" (to a matrix channel) is provided by the transmitter's plurality of transmit antennas and the "output" (from a matrix channel) is provided by a plurality of receive antennas. Thus each receive antenna receives a combination of signals from all the transmitter's transmit antennas which must be unscrambled.

A typical wireless network comprises a plurality of mobile terminals (MT), each in radio communication with an access point (AP) or base station of the network. The access points are also in communication with a central controller (CC) which in turn may have a link to other networks, for example a fixed Ethernet-type network. Until recently considerable effort was put into designing systems so as to mitigate for the perceived detrimental effects of multipath propagation, especially prevalent in wireless LAN (local area network) and other mobile communications environments. However the described work G.J. Foschini and M.J. Gans, "On limits of wireless communications in a fading environment when using multiple antennas" *Wireless Personal Communications* vol. 6, no.3, pp.311-335, 1998 has shown that by utilising multiple antenna architectures at both the transmitter and receiver (a so-called multiple-input multiple-output (MIMO) architecture) vastly increased channel capacities are possible.

Attention has also turned to the adoption of space-time coding techniques (in OFDM, space-frequency coding) for wideband channels. Typically channel state information (CSI) for maximum likelihood detection of such coding is acquired via training sequences and the resulting CSI estimates are then fed to a Viterbi decoder.

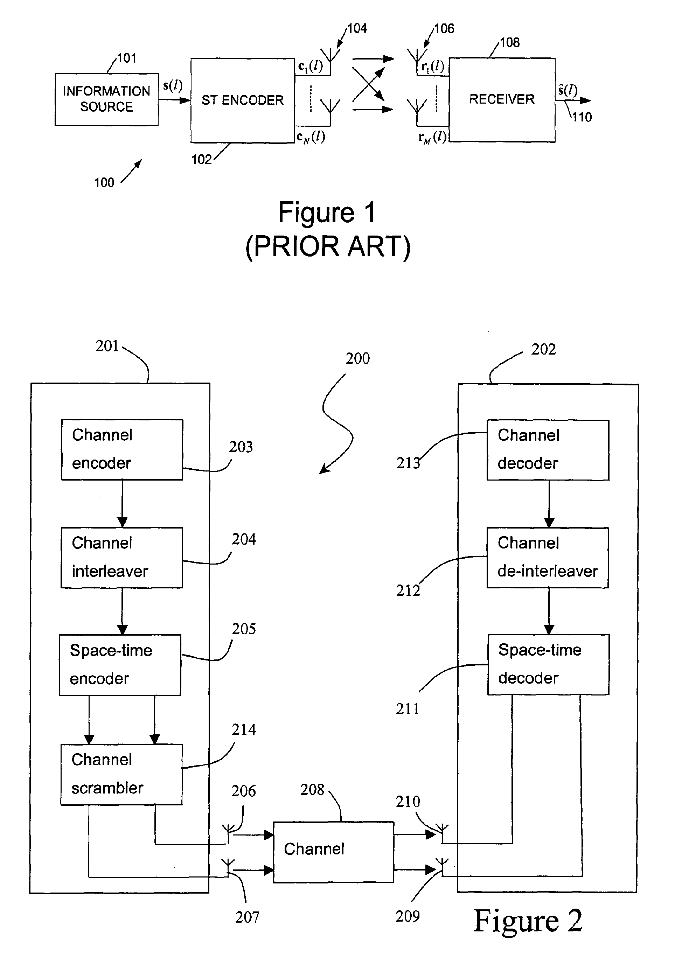

Figure 1 shows a typical MIMO communication system 100. An information source 101 provides an information symbol s(1) at time 1 to a space-time encoder 102 which encodes the symbol as $N$ code symbols $c_1(1) \, c_2(1)...., c_N(1)$, each of which is transmitted simultaneously from one of transmit antennas 104. A plurality M of receive antennas 106 receives respectively signals $r_1(1), ....r_M(1)$ which are input to receiver 108. The receiver 108 provides on output 110 an estimate $\hat{s}(1)$ of the encoded transmitted symbol s(1). There is a plurality of channels between the transmit and receive antennas, for example all channels with two transmit antennas and two receive antennas.

Third generation mobile phone networks use CDMA (Code Division Multiple Access) spread spectrum signals for communicating across the radio interface between a mobile station and a base station. These 3G networks are encompassed by the International Mobile Telecommunications IMT-2000 standard (www.ituint). Collectively the radio access portion of a 3G network is referred to as UTRAN (Universal Terrestrial Radio Access Network) and a network comprising UTRAN access networks is known as a UMTS (Universal Mobile Telecommunications System) network. The UMTS system is the subject of standards produced by the Third Generation Partnership Project (3GPP, 3GPP2), technical specifications for which can be found at www.3gpp.org. Fourth generation mobile phone networks, although not yet defined, may employ MIMO-based techniques.

In practical data communication systems multipath within a channel results in intersymbol interference (ISI), which is often corrected with a combination of equalisation and forward error coding. For example a linear equaliser effectively convolves the received data with an inverse of the channel impulse response to produce data estimates with ISI substantially removed. An optimal equaliser may employ maximum likelihood (ML) sequence estimation or maximum a priori estimation (MAP), for example using a Viterbi algorithm.

Conventional MIMO systems employ a channel encoder, a channel interleaver and a space-time decoder. The receiver usually comprises a space-time decoder, channel de-interleaver and channel decoder. Sometimes the channel may be such that it is difficult to separate the signals at the receiver. This may occur, for example, if the columns of the channel matrix are almost linearly dependent. This problem may be alleviated if the channel also varies with time, since this provides time diversity at the receiver.

However, if the channel is substantially constant, *i.e*..there is little or no variation with time, during the channel encoded block, then no time diversity is achieved. If this substantially constant channel is "bad" as described as in the previous paragraph, then the coding will not provide much of an advantage.

In accordance with a first aspect of the present invention, there is provided a channel scrambler for use in a transmitter employing a plurality of transmit antennas, the scrambler comprising at least two signal inputs for inputting a signal, a processor for applying a time variation to each signal to produce a scrambled signal, and an output stage for outputting each scrambled signal to an antenna. The time variation is preferably achieved by applying a time varying scrambling matrix to each signal.

The time varying matrix effectively creates an artificially fading, time varying effective channel which replaces the constant channel. This means that the channel "seen" by the receiver varies with time, so that it is sometimes better and sometimes worse than the original. These variations can be used by the channel decoder, where strong signals will help weak signals and thus reduce the error probability. No knowledge of the channel at the transmitter is necessary.

Preferably the scrambling matrix, which may be a pseudo-random matrix, varies with time for the length of a channel block of the signal. The scrambling matrix may be fixed for one symbol period, changing for the each subsequent symbol period.

The scrambling matrix is preferably a rotation matrix, and may take the form $\mathbf{Q}_k = \mathbf{P}^k$, where $\mathbf{P}$ is a rotation matrix and $k$ is a time index denoting a symbol period, which may vary from 1 up to the number of symbol intervals in a block. $\mathbf{P}$ is preferably unitary.

The invention also provides a transmitter including a channel scrambler as described above and at least two transmit antennas for transmitting the scrambled signals.

In accordance with a second aspect of the present invention there is provided a method of encoding data in a communications system employing a receiver with at least one receive antenna and a transmitter with a plurality of transmit antennas, the method comprising preparing a signal for transmitting from the transmit antennas, applying a time varying channel scrambling matrix to the prepared signal to generate a time scrambled signal, and transmitting the scrambled signal from the transmit antennas.

Some preferred embodiments of the invention will now be described by way of example only and with reference to the accompanying drawings, in which:

Figure 1 shows a known MIMO space-time coded communications system;

Figure 2 shows a MIMO communications system including a channel scrambler; and

Figure 3 shows the results of a simulation of a system incorporating channel scrambling.

Figure 2 illustrates a MIMO communications system 200 having a transmitter 201 and receiver 202. The transmitter 201 includes a channel encoder 203, channel interleaver 204, and space-time encoder 205 in the usual way. Data is transmitted from two antennas 206, 207, via a channel 208, to antennas 209, 210 mounted on the receiver 201. The receiver includes a space-time decoder 211, channel de-interleaver 212 and channel decoder 213.

In a narrowband channel, the input-output relationship between the received and transmitted signal can normally be written as

$$r_k = Hx_k + v_k$$

where $\mathbf{r}_k \in C^{N \times 1}$ is the received signal, $\mathbf{H} \in C^{N \times M}$ is the channel, $\mathbf{x}_k \in C^{M \times 1}$ is the transmitted signal, $\mathbf{v}_k \in C^{N \times 1}$ is the channel noise and $k$ denotes the time index.

In the example shown in Figure 2, the transmitter also includes a channel scrambler 214, which acts on the data after it has been encoded by the space-time encoder 205, but before it is transmitted into the channel 208 by the antennas 206, 207. The channel scrambler introduces a time variant component into the transmitted signal, and the input-output relationship for the arrangement of Figure 2 is now

$$r_k = HQ_k x_k + v_k$$

where $k$, $\mathbf{H}$, $\mathbf{r}_k$, $\mathbf{x}_k$ and $\mathbf{v}_k$ are as defined above, and $\mathbf{Q}_k \in C^{M \times M}$ is the channel scrambler 214.

The introduction of the channel scrambler $\mathbf{Q}_k$ effectively creates a new equivalent channel $\tilde{\mathbf{H}}_k = \mathbf{HQ}_k$ which is time-variant even if the channel $\mathbf{H}$ is constant. Thus if the channel $\mathbf{H}$ is "bad", meaning that it is difficult to separate the signals at the receiver, the provision of new, pseudo-random channels $\tilde{\mathbf{H}}_k$ will help the channel decoder. It will be appreciated that this technique will be applicable to a wideband channel, as well as the narrowband channel illustrated.

There are several possible ways of creating channel scramblers $\mathbf{Q}_k$. One simple method involves the use of a rotation matrix $\mathbf{P}$ applied once for each symbol. This generates a channel scrambler $\mathbf{Q}_k = \mathbf{P}^k, k = 1 \ldots N_{sym}$ where $N_{sym}$ is the number of symbol intervals in a block. If $\mathbf{P}$ is a unitary matrix, then $\mathbf{P}^k$ will also be unitary for all $k$. The matrix $\mathbf{P}$ could, for example, be designed in the same way as for linear precoding, as described by Y. Xin, Z. Wang and G. Giannakis in "Space-time constellation-rotating codes maximising diversity and coding gains", Globecom 2001, vol. 1, pp. 455-459, 2001, where the objective is to spread data symbols over all antennas to achieve maximum diversity. However, in that application, the same matrix P is applied at all times, i.e. $\mathbf{Q}_k = \mathbf{P}, k = 1 \ldots N_{sym}$, so pseudo-random scrambling of the channel is not achieved.

An example of the operation of the channel scrambler 214 will now be described. Consider a MIMO system having a channel matrix described by

$$\mathbf{H} = \begin{pmatrix} 1 & 1 \\ 1 & 0.9 \end{pmatrix}.$$

The columns of this matrix, which represents how the receiver sees the different transmitted symbols, are quite similar. The normalised correlation between the two columns is

$$\frac{1 \times 1 + 1 \times 09}{\sqrt{1^2 + 1^2} \times \sqrt{1^2 + 0.9^2}} = 0.9986.$$

This means that it is very difficult to separate the signals at the receiver.
Now suppose a channel scrambler as described above is applied to the data before transmission, given by the matrix

$$\mathbf{P} = \begin{pmatrix} \cos\phi & \sin\phi \\ -\sin\phi & \cos\phi \end{pmatrix}.$$

The equivalent channel is now

$$\widetilde{\mathbf{H}} = \mathbf{HP} = \begin{pmatrix} \cos\phi - \sin\phi & \sin\phi + \cos\phi \\ \cos\phi - 0.9\sin\phi & \sin\phi + 0.9\cos\phi \end{pmatrix}$$

and this has the same effect as a real channel with these values.
If the angle is given by $\phi = 2\pi \times 0.38$, the equivalent channel matrix is

$$\widetilde{\mathbf{H}} = \begin{pmatrix} -1.4135 & -0.0444 \\ -1.3451 & 0.0285 \end{pmatrix},$$

which has a correlation of

$$\frac{-1.4135 \times -0.0444 - 1.3451 \times 0.0285}{\sqrt{(-1.4135)^2 + (-1.3451)^2} \times \sqrt{(-0.0444)^2 + 0.0285^2}} = 0.2379.$$

Thus the use of a scrambling matrix at the transmitter leads to the decorrelation of the columns.
Since the channel is not known at the transmitter, it is of course conceivable that the scrambling could actually increase the correlation. However, at the next symbol interval the scrambling matrix **P** has changed to $\mathbf{P}^2$, so the correlation will be different again. Different scrambling matrices are then used for each subsequent symbol interval.
Thus there will be at least some instances where the change in the channel will improve the decoding significantly, providing the channel decoder 213 with a better input signal. For most channels there will be no difference between data encoded with a scrambling matrix and without. However, for a constant, "bad" channel, *i.e.* one with a high correlation between the columns, the scrambling matrix will make a big difference.
The data is decoded by the receiver in the normal way. The receiver 202 will know the scrambling matrix $\mathbf{Q}_k$ applied by the channel scrambler 214. If the channel **H** is also known by the receiver (as is usually the case), then it is a simple matter for the receiver to determine the effective channel $\widetilde{\mathbf{H}}_k = \mathbf{HQ}_k$ and decode the data as though that was the actual channel traversed by the data.
The system described will improve performance in most environments, but is particularly useful in quasi-static environments, such as indoors and in offices. It is also particularly appropriate for systems such as wireless Local Area Networks (LAN), where the transmitter and receiver may not move relative to each other over a long period of time. The complexity is very low, since only one additional matrix multiplication is involved per symbol interval at the transmitter and receiver. In addition, as mentioned above, the operation of the channel estimator is unaffected by the channel scrambling, minimising the overall impact of the system complexity.

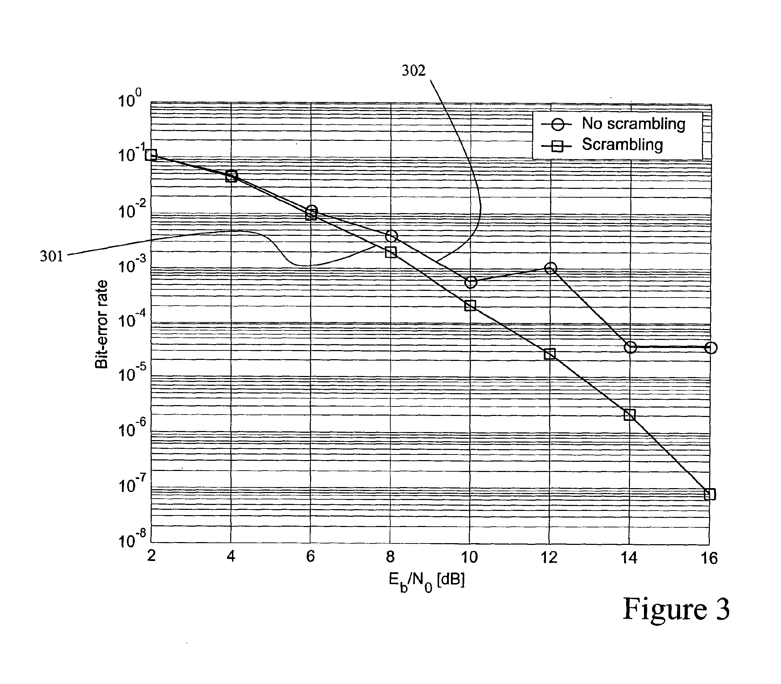

Figure 3 shows the results of the simulation of a system having channel scrambling. The system is of the type shown in Figure 2, and has two transmit and two receive antennas in a spatial multiplexing scheme using the Bell Laboratories Layered Space-Time Architecture (BLAST), a rate ½ convolutional code with polynomials 5 and 7 and a block length of 10,000 bits. The receiver uses an iterative decoding scheme with four iterations where extrinsic information from the convolutional decoder is fed back to the *a posteriori* probability (APP) space-time decoder. It can be seen that the bit error rate is lower when scrambling is used 301 compared to when scrambling is not used 302.

It will be appreciated that variations to the above described embodiments may still fall within the scope of the invention. For example, the channel scrambler has been described with reference to a system having two transmit and two receive antennas, but will apply to systems having any number of antennas and channel taps. Similarly, the channel scrambler may be used for any application having multiple antennas, whether wideband or narrowband.

**Claims**

1. A channel scrambler for use in a transmitter employing a plurality of transmit antennas, the scrambler comprising:

   at least two signal inputs for inputting a signal;
   a processor for applying a variation with time to each signal to produce a scrambled signal; and
   an output stage for outputting each scrambled signal to an antenna.

2. A channel scrambler as claimed in claim 1, wherein the processor is arranged so that the time variation is applied to each signal by applying a time-varying scrambling matrix to each signal.

3. A channel scrambler as claimed in claim 2, wherein the scrambling matrix varies with time for the length of a channel block of each input signal.

4. A channel scrambler as claimed in claim 2 or 3, wherein the scrambling matrix is fixed for one symbol period and changes for the each subsequent symbol period.

5. A channel scrambler as claimed in claim 4, wherein the scrambling matrix is a rotation matrix.

6. A channel scrambler as claimed claim 5, wherein the scrambling matrix takes the form $\mathbf{Q}_k = \mathbf{P}^k$, where $\mathbf{P}$ is a rotation matrix and k is a time index denoting a symbol period.

7. A channel scrambler as claimed in claim 6, wherein k varies from 1 up to the number of symbol intervals in a block.

8. A channel scrambler as claimed in claim 6 or 7, wherein $\mathbf{P}$ is unitary.

9. A channel scrambler as claimed in claim 2, 3 or 4, wherein the scrambling matrix is a pseudo-random matrix.

10. A transmitter including the channel scrambler of any preceding claim and at least two transmit antennas for transmitting the scrambled signals.

11. A method of encoding data in a communications system employing a receiver with at least one receive antenna and a transmitter with a plurality of transmit antennas, the method comprising:

    preparing a signal for transmitting from the transmit antennas;
    applying a time varying channel scrambling matrix to the prepared signal to generate a time scrambled signal; and
    transmitting the scrambled signal from the transmit antennas.

12. A method as claimed in claim 11, wherein the scrambling matrix varies with time for the length of a channel block of each input signal.

**13.** A method as claimed in claim 11 or 12, wherein the scrambling matrix is fixed for one symbol period and changes for the each subsequent symbol period.

**14.** A method as claimed in claim 13, wherein the scrambling matrix is a rotation matrix.

**15.** A method as claimed claim 14, wherein the scrambling matrix takes the form $\mathbf{Q}_k = \mathbf{P}^k$, where $\mathbf{P}$ is a rotation matrix and k is a time index denoting a symbol period.

**16.** A method as claimed in claim 15, wherein k varies from 1 up to the number of symbol intervals in a block.

**17.** A method as claimed in claim 15 or 16, wherein $\mathbf{P}$ is unitary.

**18.** A method as claimed in claim 11, 12 or 13, wherein the scrambling matrix is a pseudo-random matrix.

**19.** A method as claimed in any of claims 11 to 18, further comprising transmitting the scrambled signal.

Figure 1
(PRIOR ART)

Figure 2

Figure 3

EP 1 555 768 A1

**European Patent Office**

## EUROPEAN SEARCH REPORT

Application Number

EP 04 25 7801

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 009 124 A (LUCENT TECHNOLOGIES INC) 14 June 2000 (2000-06-14) <br> * page 2, line 49 - page 3, line 20 * <br> * page 3, line 33 - page 4, line 14 * <br> * page 7, line 2 - line 27 * <br> * page 8, line 42 - line 51 * <br> ----- | 1-19 | H04B7/08 <br> H04L1/06 |
| X | US 2003/073464 A1 (GIANNAKIS GEORGIOS B ET AL) 17 April 2003 (2003-04-17) <br><br> * page 1, right-hand column, paragraph 7 - paragraph 9 * <br> * page 2, left-hand column, paragraph 22 - right-hand column, paragraph 24 * <br> * page 3, left-hand column, paragraph 36 - right-hand column, paragraph 38 * <br> * page 10, left-hand column, paragraph 136 * <br><br> ----- | 1-7, 9-16,18, 19 | |
| X | WO 01/56218 A (TELEFONAKTIEBOLAGET LM ERICSSON) 2 August 2001 (2001-08-02) <br><br> * page 6, line 9 - line 19 * <br> * page 8, line 8 - page 9, line 18 * <br> * page 17, line 24 - page 18, line 10 * <br> * figures 2,3a * <br> ----- | 1-7, 9-16,18, 19 | TECHNICAL FIELDS SEARCHED (Int.Cl.7) <br><br> H04L |
| X | EP 1 223 702 A (LUCENT TECHNOLOGIES INC) 17 July 2002 (2002-07-17) <br> * page 2, line 30 - line 52 * <br> * page 4, line 16 - line 44 * <br> * page 5, line 3 - line 8 * <br> * page 6, line 37 - line 56 * <br> * claims 1,2; figure 1 * <br> ----- | 1-5, 10-14,19 | |

The present search report has been drawn up for all claims

| Place of search | Date of completion of the search | Examiner |
|---|---|---|
| The Hague | 15 April 2005 | Papantoniou, A |

EPO FORM 1503 03.82 (P04C01)

**ANNEX TO THE EUROPEAN SEARCH REPORT
ON EUROPEAN PATENT APPLICATION NO.**                    EP 04 25 7801

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2005

| Patent document cited in search report | | Publication date | Patent family member(s) | | Publication date |
|---|---|---|---|---|---|
| EP 1009124 | A | 14-06-2000 | US | 6363121 B1 | 26-03-2002 |
| | | | CA | 2287759 A1 | 07-06-2000 |
| | | | DE | 69904284 D1 | 16-01-2003 |
| | | | DE | 69904284 T2 | 28-08-2003 |
| | | | EP | 1009124 A2 | 14-06-2000 |
| | | | JP | 3604981 B2 | 22-12-2004 |
| | | | JP | 2000232385 A | 22-08-2000 |
| US 2003073464 | A1 | 17-04-2003 | EP | 1393486 A1 | 03-03-2004 |
| | | | JP | 2004534447 T | 11-11-2004 |
| | | | WO | 02098051 A1 | 05-12-2002 |
| WO 0156218 | A | 02-08-2001 | US | 6804307 B1 | 12-10-2004 |
| | | | AU | 2418101 A | 07-08-2001 |
| | | | DE | 10085409 T0 | 18-06-2003 |
| | | | WO | 0156218 A1 | 02-08-2001 |
| EP 1223702 | A | 17-07-2002 | US | 2002118770 A1 | 29-08-2002 |
| | | | DE | 60101304 D1 | 08-01-2004 |
| | | | DE | 60101304 T2 | 09-09-2004 |
| | | | EP | 1223702 A1 | 17-07-2002 |

EPO FORM P0459

For more details about this annex : see Official Journal of the European Patent Office, No. 12/82